# EUROPEAN PATENT APPLICATION

(11) **EP 1 044 780 A1**
(43) Date of publication of application: **18.10.2000**
(21) Application number: 00105717.3
(22) Date of filing: 17.03.2000
(51) Int. Cl.: B29C 45/16

(54) **A method and an injection moulding machine for manufacturing products consisting of at least two product portions connected with each other**

(30) Priority: 09.04.1999 SE 9901282
(71) Applicant: Forsheda AB, S-330 12 Forsheda (SE)
(72) Inventor: Hellström, Börje, 342 34 Alvesta (SE); Andersson, Lars-Gunnar, 331 41 Värnamo (SE); Radén, Jonas, 330 12 Forsheda (SE)
(74) Representative: Linde, Leif

(57) **Abstract**

A method for injection moulding products (2) in an injection moulding machine, the products consisting of product portions (4, 6) of materials of different kinds connected with each other, for example sealing rings consisting of a sealing portion of a thermoplastic elastomer and a retainer portion of plastic. A mould part (18) is arranged in connection with a first mould surface (12) and defines together with this mould surface a cavity for forming the first product portion (4), the cavity being supplied with the material for forming this product portion (4), for example a thermoplastic elastomer. The mould part (18) is separated from the first mould surface (12) when the material of the first product portion has been transferred to a solid state. The mould part (18) is then arranged in connection with a second mould surface (16), wherein the first product portion (4), the second mould surface (16) and the mould part (18) together defines a cavity for forming the second product portion, the cavity for forming the second product portion being supplied with the material for forming the second product portion (6), for example a plastic material. The mould part (18) is separated from the second mould surface (16) when the material of the second product portion has been transferred into solid state, whereupon the product (2) is ejected from the cavity. The mould part (18) is displaced to a position outside the injection moulding machine when it has been separated from the first mould surface (12) and is outside the injection moulding machine moved to a suitable position for being connected with the second mould surface (16). After that the mould part is displaced into the injection moulding machine to the position in which the first product portion (4), the second mould surface (16) and the mould part (18) define the cavity for forming the second product portion (6). The invention relates also to an injection moulding machine for accomplishing the method.

## Description

The present invention relates to a method and an injection moulding machine for injection moulding products consisting of at least two product portions connected with each other and consisting of polymer material of different kinds, for example sealing rings consisting of a sealing portion of a thermoplastic elastomer and a retainer portion of plastic.

In a previously known method of injection moulding products of this kind a mould part is positioned in cooperation with a first mould surface so that the mould part together with the mould surface defines a cavity for forming a first product portion. The cavity is thereupon supplied with the material, for example rubber in a plastic condition, for forming this product portion, whereupon the mould part is separated from the first mould surface when the material has been transferred to a solid condition. The mould part is thereupon positioned in cooperation with a second mould surface, the first product portion, the second mould surface and the mould part thereby defining a cavity for forming the second product portion. The cavity is supplied with the polymer material intended for forming the second product portion, whereupon the mould part is separated from the second mould surface, when the material of the second product portion has been transferred to solid condition, while the product is finally ejected from the cavity in its completed condition. When the mould part is displaced from the position in which it cooperates with the first mould surface to the position in which it cooperates with the second mould surface, it is according the prior art technique necessary to displace the mould surfaces relatively far from each other so as to provide sufficient space for the displacement of the mould part in the injection moulding machine. These displacement movements of the injection moulding machine provide that the displaced mould part requires a large space.

The object of the invention is to provide a method and an injection moulding machine for manufacturing products of the kind mentioned above, in which the displacement movement requires less space.

In order to comply with this object the method according to the invention is characterized in that the mould part is moved to a position outside the injection moulding machine after it has been separated from the first mould surface, here is adjusted into a suitable position for connection to the other mould surface and is thereupon displaced into the injection moulding machine to the position in which the first product portion and the second mould surface and the mould part define the cavity for forming the second product portion. Because of the fact that the mould part is displaced to a position outside the injection moulding machine before its position is altered, there is required a very small displacement of the mould surfaces of the injection moulding machine from each other which in turn provides that the injection moulding machine requires a small space.

It is suitable that the mould part is positioned between the first and the second mould surface when it is positioned in the injection moulding machine. Thereby the mould part is displaced to the position outside the injection moulding machine by being displaced substantially in parallel with the first and the second mould surfaces whereupon it is turned 180° outside the injection moulding machine and is thereupon displaced into the machine to the position between the first and the second mould surfaces.

It is suitable that the first mould surface defines together with one side of the mould part the cavity for forming the first product portion and that the second mould surface defines in cooperation with the other side of the mould part and the first product portion the cavity for forming the second product portion. Thereby the material for forming the first product portion and the material for forming the second product portion can concurrently be supplied to the cavities at the first and second side of the mould part. Subsequently to the contemporary supply of the different materials to the two cavities and the transfer of the materials to solid condition the mould part is separated from the first and the second mould surfaces. Thereupon, the finished product consisting of the first and the second product portions is displaced from the mould and the mould part is turned outside the injection moulding machine with the first product maintained in the mould part. One side of the mould part is positioned in cooperation with the first mould surface and the other side of the mould part supporting the first product portion is positioned in cooperation with the second mould surface. Finally the simultaneous supply of the different materials to the two cavities is repeated.

As mentioned, the invention relates also to an injection moulding machine for manufacturing in the way mentioned above such products which consist of at least two product portions connected with each other and consisting of different polymer materials. Such an injection moulding machine is characterized in that the mould part included in the injection moulding machine is adapted to be adjusted with regard to its position outside the injection moulding machine between the two positions in which it cooperates with the first mould surface and the second mould surface, respectively.

It is suitable that the mould part when it is positioned in the injection moulding machine is positioned between the first and the second mould surface and that the mould part is adapted at the displacement between the two different positions in the injection moulding machine is displaced to the position outside the injection moulding machine by being displaced substantially parallel with the mould surfaces, is thereupon turned 180° in its position outside the injection moulding machine and is thereupon displaced into the injection moulding machine to the position between the mould surfaces. In order to facilitate the displacement of the mould part in this way the mould surfaces are suitably displaceable from and towards each other from and to engagement with the mould part and is the mould part displaceable perpendicular to the planes of the mould surfaces.

It is suitable that the sides of the mould part are of different designs and that these sides are adapted at a cooperation with one of the mould surfaces to form a cavity for forming the first product portion and at the cooperation with the second mould surface receive the first product portion and together with this define a cavity for forming the second product portion. When the injection moulding machine is designed in this way the machine comprises devices for concurrently injecting materials for forming the first product portion and material for forming the second product portion in one cavity each.

The method and the injection moulding machine according to the invention shall in the following be described with reference to the accompanying drawings.
Fig. 1 is an axial section of a sealing ring manufactured according to the method and by means of the injection moulding machine according to the invention.
Figs 2a - 2f illustrate a section of a moulding tool during the different method steps for conducting the method according to the invention.
Figs 3a - 3d show a moulding tool corresponding to the tool shown in Figs 2a-2f when conducting a modified embodiment of the method according to the invention.
Fig. 4 shows schematically an injection moulding machine according to the invention.

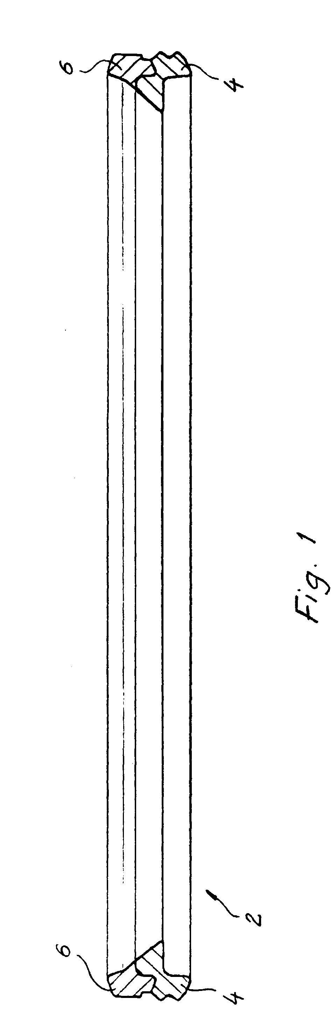

The sealing ring 2 shown in Fig. 1 is of circular shape and consists of two portions connected with each other, a sealing portion consisting of rubber or a thermoplastic elastomer and a retainer portion 6 consisting of a plastic material. The sealing ring 2 is intended to be positioned in an inner groove in a plastic pipe socket and seal the space between the socket and a spigot end introduced therein and belonging to a connecting plastic pipe. Thereby the retainer portion 6 has the object of retaining the sealing ring 2 in the groove in the socket while the sealing portion 4 is compressed between the inner surface of the socket and the outer surface of the spigot end for sealing the space between the socket and the spigot end.

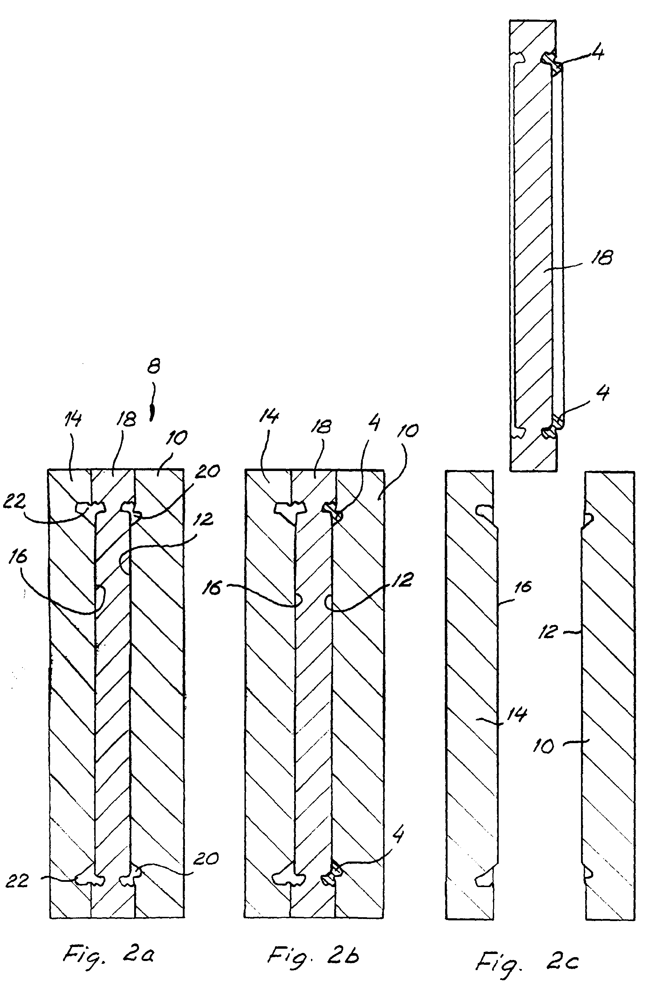

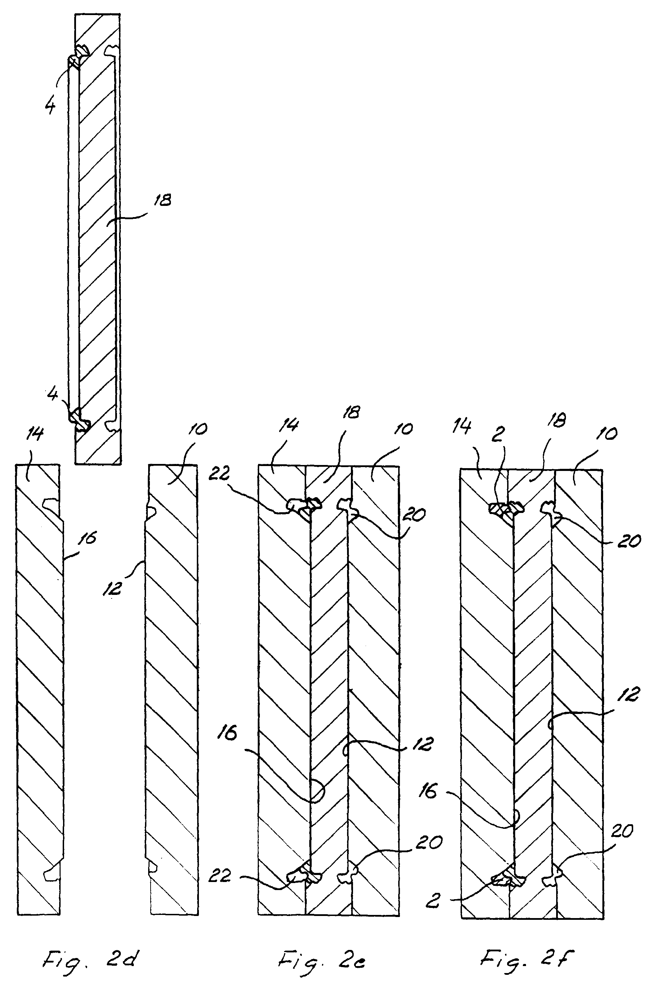

In Figs 2a-2f there is schematically shown an embodiment of the different method steps included in the method according to the invention for manufacturing the sealing ring according to Fig. 1. When conducting the method there is used a moulding tool 8 schematically shown in section and consisting of a mould part 10 having a first mould surface 12, a mould part 14 having a second mould surface 16 and an intermediate mould part 18 formed as a plate. The mould surface 12 of the mould part 10 forms together with the mould plate 18 a cavity 20 for forming the sealing portion 4 of the sealing ring 2. The mould part 14 forms with its mould surface 16 together with the mould plate 18 a cavity 22, the design of which corresponds to the design of the complete sealing ring 2. The cavity 20 is supplied with thermoplastic elastomer material until the material fills up the cavity 20 as shown in Fig. 2b. When the material of the sealing portion 4 has been transferred to solid condition the mould parts 10 and 14 are displaced somewhat from each other to the relative position shown in Fig. 2c, whereupon the mould plate 18 is displaced from its position between the mould surfaces 12 and 16 in parallel with the mould surfaces 12 and 16 to the position shown in Fig. 2c above the mould portions 10 and 14. While the mould plate 18 is positioned above the mould portions 10 and 14 the mould plate 18 is turned 180°, so that the mould plate 18 takes the position shown in Fig. 2d in which the mould plate 18 has the mould portion 4 positioned at the opposite side of the mould plate in relation to what is shown in Fig. 2c. The mould plate 18 is thereupon displaced into a position between the mould parts 10 and 14, whereupon the mould parts 10 and 14 are displaced towards each other to the position contacting the mould plate 18 according to Fig. 2e. In the position according to Fig. 2e the mould surface 16 of the mould part 14, the mould plate 18 and the sealing portion 4 define a cavity 22 corresponding to the shape of the retainer portion 6 of the sealing ring. The cavity 22 is supplied with plastic material in liquid condition, for example polypropene, which fills up the cavity 22 in accordance with what is shown in Fig. 2f. When the plastic material has been transferred to solid condition the sealing ring 2 is completed and is rejected from the mould tool after the tool has been opened. Since the sealing ring has been rejected from the mould tool, the tool has the appearance as shown in Fig. 2a, whereupon the method steps are repeated for the manufacturing of a new sealing ring.

By the fact that the mould plate 18 is turned when it is positioned above the mould parts 10 and 14 it is necessary to displace the mould parts 10 and 14 only so far from each other that the mould plate 18 can be displaced from the position between the mould parts 10 and 14 in parallel with the mould surfaces 12 and 16. According to the prior art technique the mould plate has been turned between the mould parts 10 and 14, which has required a displacement of the mould parts 10 and 14 at a substantial distance from each other which in turn has caused a substantially increased size of the injection moulding machine.

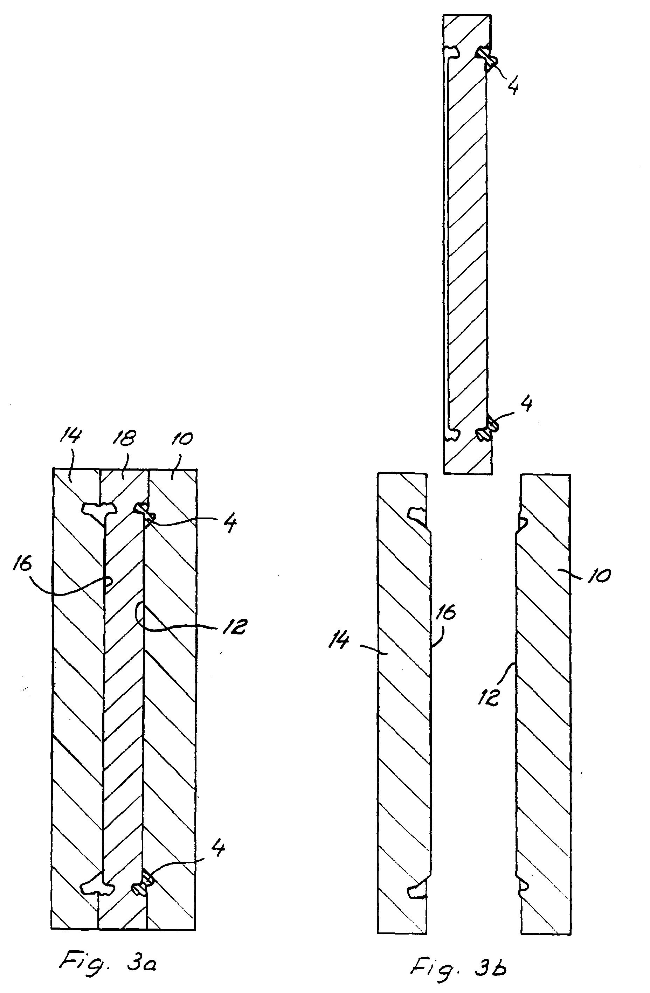

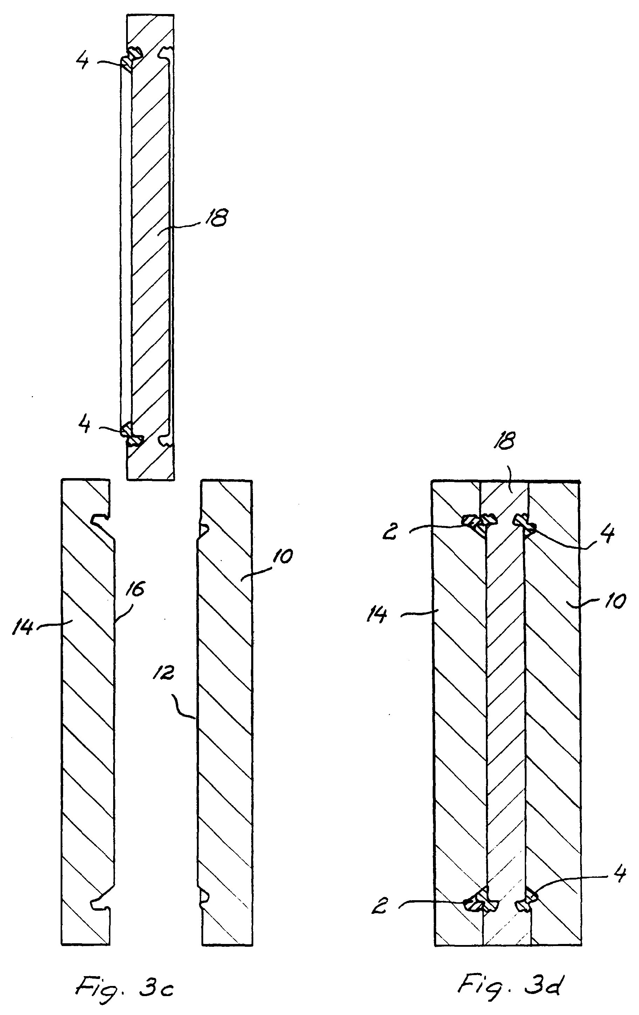

In an alternative embodiment of the method according to the invention the supply of the thermoplastic polymer elastomer for forming the sealing portion 4 of the sealing ring and the plastic material for forming the retainer portion 6 of the sealing ring at the same time. This means that the sealing portion 4 is manufactured during the last method step of the manufacture of the previous sealing ring and that the sealing portion 4 is retained in the mould as shown in Fig. 3a after the completed sealing ring has been ejected from the mould. Thereupon the mould plate 18 is turned as shown in Figs 3b and 3c which corresponds to the method steps according to Figs 2c and 2d in the embodiment previously described. When the mould plate 18 has been returned to its position between the mould surfaces 12 and 16 of the mould parts 10 and 14, respectively, there are established two cavities, one cavity for the manufacturing of the retainer portion of the sealing ring and one cavity for the manufacturing of the sealing portion of a new sealing ring. Since the plastic material for forming the retainer portion and the thermoplastic polymer ealstomer material for forming the sealing ring have concurrently been injected into the mould tool, this has the appearance as shown in Fig. 3d, in which the mould tool has a completed sealing ring and the sealing portion of a new sealing ring which shall be completed during the following method step. When the sealing ring has been ejected from the mould tool and the mould plate 18 has been turned and the mould tool 18 has been positioned in its operative position between the mould parts 10 and 14 the mould tool has again the condition shown in Fig. 3a. The method steps for manufacturing a new sealing ring and the manufacturing of the sealing part of a further sealing ring is thereupon repeated.

Also in this embodiment of the method according to the invention the mould plate 18 is turned above the mould parts 10 and 14 which makes it possible to design the injection moulding machine with smaller dimensions than what has been possible according to the prior art technique.

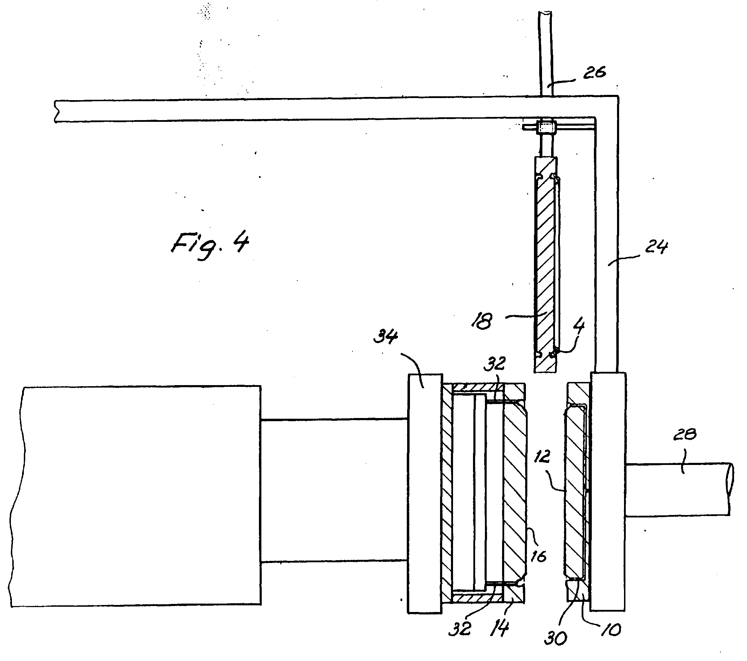

In Fig. 4 there is schematically shown an injection moulding machine according to the invention in which a mould tool of the kind shown in Figs 2a - 2f and in Figs 3a - 3d is included. Thus, the mould tool comprises two mould parts 10 and 14 and an intermediate mould plate 18. The mould plate 18 is in Fig. 4 shown in its position above the mould parts 10 and 14, and the mould plate 18 is supported by a device 24 and a bar 26 connected with the mould plate 18 in such a way that the mould plate 18 is turnable and is addition thereto displaceable in a direction which is substantially perpendicular to the mould surfaces 12 and 16 of the mould parts 10 and 14. The last-mentioned possibility of adjusting the position facilitates the displacement of the mould plate 18 when the tool parts 10 and 14 are displaced from each other so as to allow that the mould plate 18 is displaced from the position between the mould surfaces 12 and 16, and does also facilitate the positioning of the mould plate 18 when the mould plate is displaced back to the position between the tool mould parts 10 and 14 and these are displaced into engagement with the mould plate 18. The injection moulding machine 4 has in a conventional way injection cylinders of which only one injection cylinder 28 is shown and channels 30 for the supply of material from the injection cylinder 28 to the cavities. The injection moulding machine has also an ejection system which in a conventional way includes injection pins 32. The mould part 14 is supported by a movable unit 34 by means of which the mould part 14 can be displaced towards and from the mould part 10. Because of the fact that the mould parts 10 and 14 only must be displaced a short distance from each other for making it possible to displace the mould plate 18 from and to the position between the mould parts 10 and 14 the injection moulding machine according to the invention has smaller dimensions than prior art injection moulding machines.

The invention can be modified within the scope of the following claims.

## Claims

1. A method for injection moulding of products (2) in an injection moulding machine, the products consisting of at least two product portions (4, 6) of materials of different kinds and connected with each other, for example sealing rings consisting of a sealing portion of thermoplastic elastomer and a retainer portion of plastic, wherein a mould part (18) is positioned in cooperation with a first mould surface (12) and together therewith defines a cavity (20) for forming a first product portion (4), the cavity being supplied with the material for forming this product portion (4) in a plastic condition, for example a thermoplastic elastomer, the mould part (18) is separated from the first mould surface (12) when the material of the first product portion has been transformed into a solid state, the mould part (18) is arranged in cooperation with a second mould surface (16), wherein the first product portion (4), the second mould surface (16) and the mould part (18) together define a cavity (22) for forming the second product part, said cavity (22) being supplied with the material in a liquid state for forming the second product portion (6), for example a plastic material, said mould part (18) being separated from the second mould surface (16) when the material of the second product portion has been transferred into a solid state, and the product (2) is finally ejected from the cavity, **characterized** in that the mould part (18) after it has been separated from the first mould surface (12) is displaced to a position outside the injection moulding machine, here is adjusted into a suitable position for being connected with the second mould surface (16) and thereupon is moved into the injection moulding machine to the position in which the first product portion (4) and the second mould surface (16) and the mould part (18) define the cavity (22) for forming the second product portion (6).

2. A method as claimed in claim 1, wherein the mould part (18) when it is positioned in the injection moulding machine is positioned between the first and the second mould surface (12 and 16, respectively), **characterized** in that the mould part (18) is displaced to the position outside the injection moulding machine by being displaced substantially parallel with the first and the second mould surfaces (12 and 16, respectively), is turned about 180° outside the injection moulding machine and is thereupon displaced into the injection moulding machine between the first and the second mould surfaces (12 and 16, respectively).

3. A method as claimed in claim 2, **characterized** in that the first and the second mould surfaces (12 and 16, respectively) are displaced somewhat from each other before the mould part (18) is displaced to the position outside the injection moulding machine and are displaced towards each other into contact with the mould part (18) after the mould part (18) has again been displaced into the injection moulding machine.

4. A method as claimed in claim 2 or 3, in which the first mould surface (12) together with one side of the mould part (18) defines the cavity (20) for forming the first product portion (4) and the second mould surface (16) together with the other side of the mould part (18) and the first product portion (4) defines the cavity (22) for forming the second product portion, **characterized** in that the material for forming the first product portion (4) and the material for forming the second product portion (6) are at the same time supplied to the cavities (20, 22) at the opposite sides of the mould part (18).

5. A method as claimed in claim 4, **characterized** in that the mould part (18) is subsequently to the supply of the different materials to the cavities (20, 22) and the transition of the materials into solid state separated from the first and the second mould surfaces (12 and 16, respectively), whereupon the finished product (2) consisting of the first and the second portions (4, 6) is removed from the mould, the mould part (18) is turned outside the injection moulding machine with the first product portion (4) retained in the mould part (18), one side of the mould part (18) is arranged in cooperation with the first mould surface (12) and the other side of the mould part supporting the first product portion (4) is arranged in cooperation with the second mould surface (16) whereupon the simultaneous supply of the different materials to the two cavities (20, 22) is repeated.

6. An injection moulding machine for preparing products (2) according to the method of claim 1, the products consisting of at least two product portions (4, 6) connected with each other and consisting of materials of different kinds, for example sealing rings consisting of a sealing portion of thermoplastic elastomer and a retainer portion consisting of plastic, comprising a mould part (18), a first mould surface (12) and a second mould surface (16), in which the mould part (18) is displaceable between two different positions in the injection moulding machine, in which the mould part (18) in the first position cooperates with the first mould surface (12) for defining a cavity for forming the first product portion (4) and in which the mould part (18) in the second position cooperates with the second mould surface for defining together with the first product portion (4) a cavity (22) for forming the second product portion (6), **characterized** in that the mould portion (18) is adapted at the displacement between the two different positions in the injection moulding machine to be adjusted with regard to its position outside the injection moulding machine.

7. An injection moulding machine as claimed in claim 6, **characterized** in that the mould part (18) when it is positioned in the injection moulding machine is positioned between the first and the second mould surfaces (12 and 16, respectively), that the mould part (18) is adapted at its displacement between the two different positions in the injection moulding machine to be displaced to its position outside the injection moulding machine by being displaced substantially parallel with the mould surfaces (12, 16), to be turned 180° in its position outside the injection moulding machine and to be displaced into the injection moulding machine to the position between the mould surfaces (12, 16).

8. An injection moulding machine as claimed in claim 7, **characterized** in that the mould surfaces (12, 16) are displaceable from and towards each other from and to contact with the mould part (18).

9. An injection moulding machine as claimed in any of claims 6-8, **characterized** in that the mould part (18) is displaceable perpendicular to the planes of the mould surfaces (12,16).

10. An injection moulding machine as claimed in any of claims 6-9, **characterized** in that the mould part (18) has two sides adapted simultaneously to cooperate with the first and the second mould surfaces (12 and 16, respectively).

11. An injection moulding machine as claimed in claim 10, **characterized** in that the sides of the mould part (18) are of the same design and are adapted at the cooperation with the first mould surface (12) to define a cavity for forming the first product portion (4) and together with the second mould surface (16) receive the first product portion (4) and together therewith define a cavity (22) for forming the second product portion.

12. An injection moulding machine as claimed in claim 11, **characterized** in that it comprises devices for injecting at the same time the materials for forming the first product portion (4) and for forming the second product portion (6) to one cavity (20, 22) each.
